# EUROPÄISCHE PATENTSCHRIFT

(11) **EP 2 891 791 B1**
(45) Veröffentlichungstag und Bekanntmachung des Hinweises auf die Patenterteilung: **10.03.2021**
(21) Anmeldenummer: 14193125.3
(22) Anmeldetag: 14.11.2014
(51) Int. Cl.: F02N 7/00, E02F 9/22, F15B 1/02, F15B 21/14, B60K 6/12

(54) **Antriebssystem, insbesondere für eine selbstfahrende Baumaschine, insbesondere Bodenverdichter**
Drive system, in particular for a self-propelled construction machine, in particular soil compactor
Système d'entraînement, en particulier pour un engin automobile, en particulier un rouleau compresseur

(30) Priorität: 20.12.2013 DE 102013227035
(43) Veröffentlichungstag der Anmeldung: 08.07.2015
(60) Teilanmeldung: 21153924.2
(73) Patentinhaber: Hamm AG, 95643 Tirschenreuth (DE)
(72) Erfinder: Röhr, Andreas, 92637 Weiden (DE); Henker, Thomas, 95643 Tirschenreuth (DE); Pieske, Ronny, 08297 Zwönitz (DE)
(74) Vertreter: Ruttensperger Lachnit Trossin Gomoll

(56) Entgegenhaltungen:
- EP-A1- 2 687 718
- WO-A1-2011/133072
- WO-A1-2013/074164
- WO-A1-2013/159851
- DE-A1-102011 111 924
- DE-A1-102012 207 238
- US-B1- 6 460 500

## Beschreibung

Die vorliegende Erfindung betrifft ein Antriebssystem, insbesondere für eine selbstfahrende Baumaschine, insbesondere Bodenverdichter, gemäß dem Oberbegriff des Anspruchs 1, und ein entsprechendes Verfahren gemäß dem Anspruch 9.

Ein Antriebssystem gemäß dem Oberbegriff ist aus der WO 2013/159851 A1 bekannt, bei welchem die Anlass-Ventileinheit ein Umsteuerventil und ein weiteres Ventil umfasst und die Lade/Entlade-Ventileinheit das Umsteuerventil, das weitere Ventil und ein Rückschlagventil umfasst. Das Umsteuerventil ist in einem das Rückschlagventil umgehenden Bypassströmungsweg angeordnet und im Antriebsunterstützungsbetriebszustand und Anlassbetriebszustand geöffnet, im Ladebetriebszustand jedoch geschlossen. Das weitere Ventil ist sowohl im Antriebsunterstützungsbetriebszustand, im Ladebetriebszustand als auch im Anlassbetriebszustand zur Durchströmung mit Druckfluid geöffnet.

Aus der WO 2013/074164A1 ist ein Antriebssystem einer als Radlader ausgebildeten Baumaschine bekannt. Bei diesem bekannten Antriebssystem ist ein Antriebsaggregat über eine Getriebeanordnung mit verschiedenen Hydraulikkreisläufen antriebsmäßig gekoppelt. Diese Hydraulikkreisläufe umfassen einen Hydraulik-Fahrkreislauf mit einer durch das Antriebsaggregat antreibbaren Hydraulik-Fahrpumpe und einem im Betrieb der Hydraulik-Fahrpumpe durch das strömende Fluid angetriebenen Hydraulik-Fahrmotor zum Antrieb der Antriebsräder des Radladers. Ferner sind ein bzw. mehrere Hydraulik-Arbeitskreisläufe vorgesehen. Auch diese umfassen jeweils eine durch das Antriebsaggregat über die Getriebeanordnung antreibbare Hydraulik-Arbeitspumpe. Durch den durch diese Pumpen generierten Hydraulikdruck können beispielsweise Kolben/Zylinder-Einheiten aktiviert werden, um im Arbeitsbetrieb des Radladers eine Schaufel zu bewegen. Dieses Antriebssystem umfasst ferner eine Hydraulik-Antriebsunterstützungseinheit. Diese umfasst eine durch das Antriebsaggregat über die Getriebeanordnung antreibbare HydraulikPumpe/Motor-Baugruppe, welche im Pumpenbetrieb einen Druckfluidspeicher lädt, also den Druck des darin gespeicherten Fluids erhöht. Die Hydraulik-Pumpe/Motor-Baugruppe dieser Hydraulik-Antriebsunterstützungseinheit kann auch als Hydraulikmotor betrieben werden, um unter Entspannung des Drucks in dem Druckfluidspeicher ein Drehmoment zu generieren, welches über die Getriebeanordnung auf die verschiedenen Hydraulikkreisläufe, also den Hydraulik-Fahrkreislauf und den bzw. die Hydraulik-Arbeitskreisläufe übertragen werden kann. Die Hydraulik-Antriebsunterstützungseinheit kann somit ein Antriebsunterstützungsdrehmoment liefern.

DE102012207238A1 beschreibt eine Startvorrichtung zum Starten einer Brennkraftmaschine mittels einer Hydraulik-Pumpe/Motor-Baugruppe.

EP2687718A1 beschreibt einen Hydraulik-Arbeitskreislauf mit einer Hydraulik-Pumpe/Motor-Baugruppe, einem Druckfluidspeicher und einem Bypassströmungsweg.

Es ist die Aufgabe der vorliegenden Erfindung, ein Antriebssystem, insbesondere für eine selbstfahrende Baumaschine, insbesondere Bodenverdichter, vorzusehen, welches eine effizientere Ausnutzung der Hydraulik-Antriebsunterstützungseinheit ermöglicht.

Erfindungsgemäß wird diese Aufgabe gelöst durch ein Antriebssystem der eingangs genannten Art mit den Merkmalen des kennzeichnenden Teils des Anspruchs 1.

Es ist vorgesehen, dass die Hydraulik-Pumpe/Motor-Baugruppe in einem Anlassbetriebszustand als Motor zum Anlassen des Antriebsaggregats betreibbar ist.

Durch das Ausnutzen der Hydraulik-Pumpe/Motor-Baugruppe als Motor zum Anlassen des Antriebsaggregats besteht die Möglichkeit, die Hydraulik-Antriebsunterstützungseinheit in einem weiteren Betriebszustand, also dem Anlassbetriebszustand, zu nutzen. Dies entlastet andere Systembereiche, wie einen beispielsweise in Zuordnung zu dem Antriebsaggregat allgemein vorgesehenen, elektrisch zu betreibenden Anlasser und gestattet andererseits das vorübergehende energiesparende Abstellen des Antriebsaggregats, wenn dieses beispielsweise während eines vorübergehenden Parkens einer mit einem derartigen Antriebssystem ausgestatteten Baumaschine nicht zur Erzeugung eines Antriebsdrehmoments benötigt wird.

Um die in einem Druckfluidspeicher gespeicherte Energie zum Anlassen des Antriebsaggregats in einfacher Weise nutzen zu können, umfasst die Hydraulik-Antriebsunterstützungseinheit ein Anlass-Ventileinheit zum wahlweisen Freigeben/Unterbrechen einer Strömungsverbindung zwischen wenigstens einem Druckfluidspeicher und der Hydraulik-Pumpe/Motor-Baugruppe wenigstens in Strömungsrichtung von dem Druckfluidspeicher zur Hydraulik-Pumpe/Motor-Baugruppe. Dieses Anlassventil kann also speziell für die zum Anlassen erforderlichen Volumenströme ausgebildet sein, kann insbesondere dazu ausgebildet sein, den Volumenstrom auch definiert einzustellen bzw. zu regeln, um zu gewährleisten, dass durch die HydraulikPumpe/Motor-Baugruppe im Anlassbetriebszustand auch nur das für das Anlassen des Antriebsaggregats erforderliche Antriebsunterstützungsdrehmoment bereitgestellt wird.

Um bei dem erfindungsgemäßen Antriebssystem für den Anlassbetriebszustand grundsätzlich eine Drosselung auf dafür erforderliche Volumenströme bereitstellen zu können, wird vorgeschlagen, dass im Strömungsweg zwischen dem wenigstens einen Druckspeicher und der Anlass-Ventileinheit oder/und im Strömungsweg zwischen der Anlass-Ventileinheit und der Hydraulik-Pumpe/Motor-Baugruppe eine Strömungsdrosselanordnung vorgesehen ist.

Eine definierte Einstellung des zum Anlassen des Antriebsaggregats erforderlichen Drehmoments kann in einfacher Weise dadurch erhalten werden, dass die Anlass-Ventileinheit ein Proportionalventil umfasst.

Die definierte Beladung bzw. Entladung eines Druckfluidspeichers zur Aufnahme bzw. zum Abgeben von Druckfluid wird dadurch erhalten, dass die Hydraulik-Antriebsunterstützungseinheit eine Lade/Entlade-Ventileinheit zum wahlweisen Freigeben/Unterbrechen einer Strömungsverbindung zwischen der Hydraulik-Pumpe/Motor-Baugruppe und wenigstens einem Druckfluidspeicher wenigstens in Strömungsrichtung vom Druckfluidspeicher zur Hydraulik-Pumpe/Motor-Baugruppe umfasst. Ferner kann die Hydraulik-Antriebsunterstützungseinheit eine Entspannungs-Ventileinheit zum wahlweisen Freigeben/Unterbrechen einer Strömungsverbindung zwischen wenigstens einem Druckfluidspeicher und einem Fluidreservoir wenigstens in Strömungsrichtung vom Druckfluidspeicher zum Fluidreservoir umfassen.

Eine insbesondere in Fehlerzuständen auftretende, undefinierte Entleerung eines Druckfluidspeichers in Richtung zur Hydraulik-Pumpe/Motor-Baugruppe kann bei einer vorteilhaften Weiterbildung des erfindungsgemäßen Antriebssystems beispielsweise dadurch verhindert werden, dass die Anlass-Ventileinheit oder/und die Lade/Entlade-Ventileinheit in einen die Strömungsverbindung unterbrechenden Grundzustand vorgespannt ist oder/und dass die Entspannungs-Ventileinheit in einen die Strömungsverbindung freigebenden Grundzustand vorgespannt ist.

Die Hydraulik-Antriebsunterstützungseinheit umfasst vorteilhafterweise einen offenen Kreislauf. Ferner besteht bei einer besonders vorteilhaften Weiterbildung zwischen wenigstens einem Fluidkreislauf, vorzugsweise jedem Fluidkreislauf und der Hydraulik-Antriebsunterstützungseinheit keine Fluidaustauschverbindung. Dies ermöglicht es, einen derartigen Fluidkreislauf als geschlossenen Hochdruckkreislauf auszugestalten.

Die vorliegende Erfindung betrifft ferner eine selbstfahrende Baumaschine, insbesondere Bodenverdichter, welche ein erfindungsgemäß aufgebautes Antriebssystem umfasst.

Ferner betrifft die vorliegende Erfindung ein Verfahren zum Betreiben eines Antriebssystems, insbesondere für eine selbstfahrende Baumaschine, insbesondere Bodenverdichter, gemäß Anspruch 9.

Das Antriebsaggregat kann beispielsweise dann außer Betrieb gesetzt werden, wenn die Drehzahl des Antriebsaggregats unter eine Schwellendrehzahl abfällt oder unter dieser ist, vorzugsweise im Bereich einer Leerlaufdrehzahl des Antriebsaggregats ist. Dieser Zustand kann beispielsweise dann eingenommen werden, wenn ein in einer derartigen Baumaschine vorgesehener Fahrhebel über eine Neutralstellung hinaus in eine Parkstellung bewegt wird, wodurch signalisiert wird, dass zumindest vorübergehend ein Fahr- bzw. Arbeitsbetrieb nicht gefordert wird.

Wird bei dem erfindungsgemäßen Verfahren eine Betriebsanforderung für das Antriebssystem erzeugt, beispielsweise durch Verstellen eines Fahrhebels von der Parkstellung in die Neutralstellung, kann das Antriebssystem die Hydraulik-Pumpe/Motor-Baugruppe im Anlassbetriebszustand betreiben, so dass das Antriebsaggregat angelassen wird und wieder zur Erzeugung eines Antriebsdrehmoments zur Verfügung steht.

Die Erfindung wird nachfolgend mit Bezug auf die beiliegenden Figuren detailliert beschrieben. Es zeigt:
- Fig. 1: in prinzipartiger Darstellung den Aufbau eines Antriebssystems für eine selbstfahrende Baumaschine;
- Fig. 2: eine als selbstfahrender Bodenverdichter ausgebildete Baumaschine, in welcher das Antriebssystem der Fig. 1 zur Anwendung kommen kann.

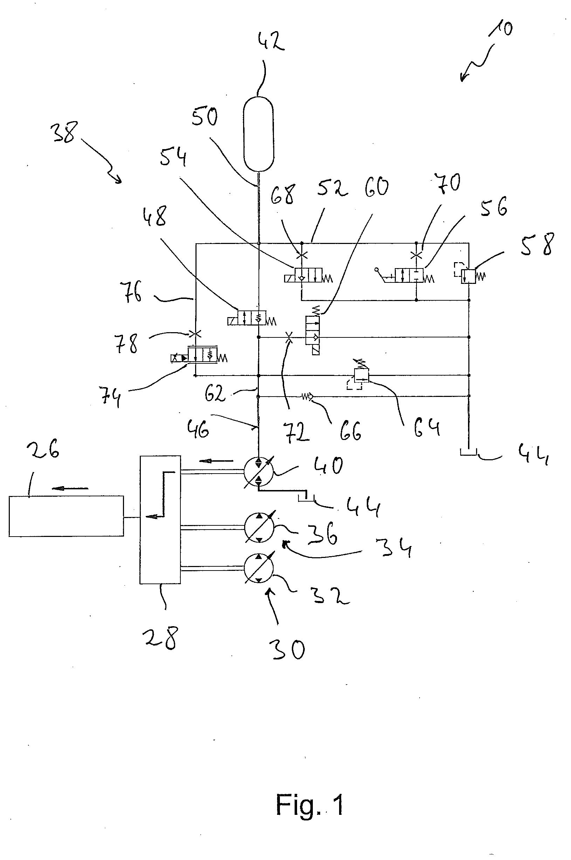

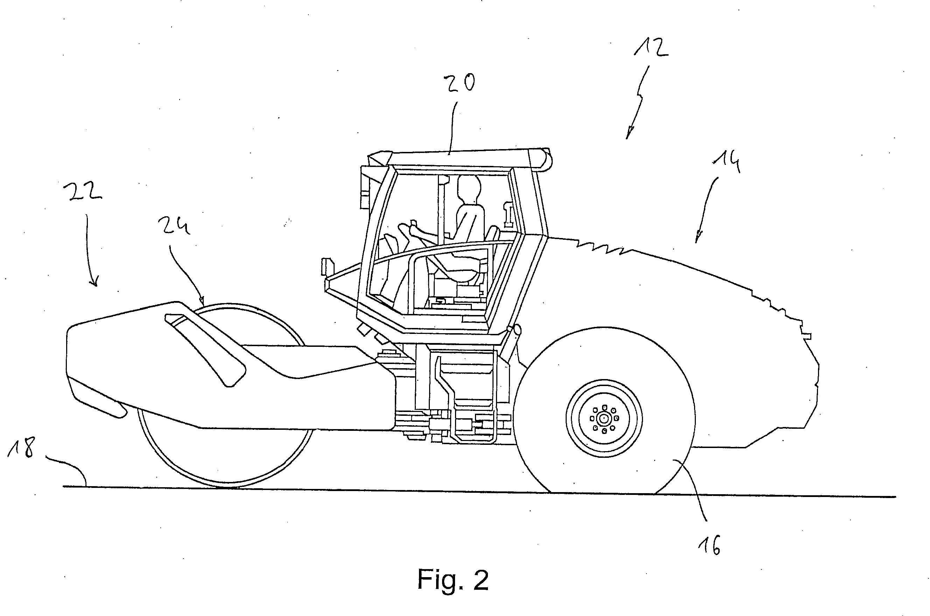

Bevor im Folgenden mit Bezug auf die Fig. 1 ein erfindungsgemäßes Antriebssystem 10 detailliert erläutert wird, wird im Folgenden mit Bezug auf die Fig. 2 der grundsätzliche Aufbau einer Baumaschine 12 erläutert, in welche das Antriebssystem 10 der Fig. 1 integriert werden kann. Diese Baumaschine 10 umfasst an einem Hinterwagen 14 Antriebsräder 16, die durch das Antriebssystem 10 zur Voranbewegung der als Bodenverdichter ausgebildeten Baumaschine 12 auf dem zu verdichtenden Untergrund 18 angetrieben werden können. Am Hinterwagen 14 ist ferner eine Führerkabine 20 vorgesehen, in welcher eine die Baumaschine 12 steuernde Person Platz findet und von welcher aus die verschiedenen Funktionalitäten der Baumaschine 12 gesteuert werden können.

An einem zum Lenken der als Bodenverdichter ausgebildeten Baumaschine 12 mit dem Hinterwagen 14 gelenkig verbundenen Vorderwagen 22 ist eine Verdichterwalze 24 vorgesehen. Mit dieser Verdichterwalze 24 wird der Untergrund 18, auf welchem die Baumaschine 12 sich bewegt, verdichtet. Um diesen Verdichtungsvorgang in definierter Art und Weise durchführen zu können, kann der Verdichterwalze 24 eine Unwuchtmassenanordnung zugeordnet sein, die beispielsweise im Inneren der Verdichterwalze 24 aufgenommen sein kann und zur Erzeugung einer Vibrationsbewegung, also einer periodischen Auf-Ab-Bewegung der Verdichterwalze 24, oder/und zur Erzeugung einer Oszillationsbewegung, also einer Hin-Her-Bewegung der Verdichterwalze 24 in Umfangsrichtung, in Betrieb gesetzt werden kann. Auch hierzu kann, wie im Folgenden noch dargelegt, das in Fig. 1 dargestellte Antriebssystem 10 eingesetzt werden.

Es sei darauf hingewiesen, dass in Fig. 2 die in Form eines Bodenverdichters dargestellte Baumaschine 12 nur hinsichtlich ihrer wesentlichen Aspekte und nur als ein Beispiel einer Maschine dargestellt ist, in welcher das Antriebssystem 10 der Fig. 1 Anwendung finden kann. Beispielsweise könnte bei Ausgestaltung als Bodenverdichter dieser anstelle der Antriebsräder 16 mit einer weiteren, dann beispielsweise auch zum Vortrieb des Bodenverdichters durch das Antriebssystem 10 der Fig. 1 zur Drehung anzutreibenden Verdichterwalze ausgestaltet sein. Auch könnte die Baumaschine 12 in Form eines Radladers, einer Planierraupe, eines Baggers oder dergleichen ausgebildet sein.

Das Antriebssystem 10 der Fig. 1 umfasst als Hauptenergiequelle ein beispielsweise als Diesel-Brennkraftmaschine ausgebildetes Antriebsaggregat 26. Dieses Antriebsaggregat 26 ist beispielsweise über eine Kupplungsanordnung, einen hydrodynamischen Drehmomentwandler oder dergleichen mit einer Getriebeanordnung 28 antriebsmäßig gekoppelt oder koppelbar. Über die Getriebeanordnung 28 kann das vom Antriebsaggregat 26 bereitgestellte Antriebsdrehmoment auf verschiedene Systembereiche übertragen bzw. verteilt werden.

Einer dieser Systembereiche umfasst einen Hydraulik-Fahrkreislauf 30 mit einer in diesen integrierten Hydraulik-Fahrpumpe 32. Diese kann mit der Getriebeanordnung 28 permanent gekoppelt sein oder beispielsweise über eine Kupplungsanordnung an die Getriebeanordnung 28 angekoppelt sein bzw. werden. Bei Antreiben der Hydraulik-Fahrpumpe 32 wälzt diese Fluid, z. B. Hydrauliköl, in dem Hydraulik-Fahrkreislauf 30 um, wodurch ein in Fig. 1 nicht dargestellter Hydraulik-Fahrmotor oder ggf. mehrere Hydraulik-Fahrmotoren angetrieben werden, so dass ein Drehmoment beispielsweise auf die Antriebsräder 16 der Baumaschine 12 übertragen werden kann. Es ist hier darauf hinzuweisen, dass beispielsweise in Zuordnung zu jedem Antriebsrad 16 oder beispielsweise in Zuordnung zu jedem Kettenfahrwerk einer Baumaschine ein eigenständig aufgebauter und arbeitender Hydraulik-Fahrkreislauf vorgesehen sein kann.

Mit 34 ist ein weiterer Hydraulikkreislauf, nämlich ein Hydraulik-Arbeitskreislauf, bezeichnet. Auch dieser umfasst eine Hydraulikpumpe, hier also eine Hydraulik-Arbeitspumpe 36. Auch diese Hydraulik-Arbeitspumpe 36 kann mit der Getriebeanordnung 28 permanent gekoppelt sein oder beispielsweise über eine Kupplungsanordnung an die Getriebeanordnung 28 angekoppelt werden. Im Betrieb der Hydraulik-Arbeitspumpe 36 erzeugt diese eine Fluidumwälzung, z. B. von Hydrauliköl, im Hydraulik-Arbeitskreislauf 34. Auch im Hydraulik-Arbeitskreislauf 34 können ein bzw. mehrere Hydraulik-Arbeitsmotoren vorgesehen sein, durch welche beispielsweise die Unwuchtmassenanordnung in der Verdichterwalze 24 angetrieben werden kann.

Es ist darauf hinzuweisen, dass die Hydraulikpumpen 32, 36 vorteilhafterweise mit variablem Fördervolumen, beispielsweise als Taumelscheibenpumpen, ausgebildet sein können, um auf diese Art und Weise die Fluidumwälzung in den als Hochdruckkreisläufen ausgebildeten Hydraulikkreisläufen 30, 34 und somit das darin auch übertragbare Drehmoment einstellen zu können.

Das Antriebssystem 10 umfasst ferner eine allgemein mit 38 bezeichnete Hydraulik-Antriebsunterstützungseinheit. Diese umfasst eine Hydraulik-Pumpe/Motor-Baugruppe 40, die mit der Getriebeanordnung 28 permanent gekoppelt sein kann oder beispielsweise über eine Kupplungsanordnung an die Getriebeanordnung 28 angekoppelt oder ankoppelbar ist und auf diese Art und Weise mit der Getriebeanordnung 28 und über diese mit dem Antriebsaggregat 26 bzw. den Hydraulikkreisläufen 30, 34, insbesondere deren Hydraulikpumpen 32, 36 antriebsmäßig gekoppelt ist. Die HydraulikPumpe/Motor-Baugruppe 40 ist zwischen einem Betriebszustand, in welchem diese als Pumpe betreibbar ist, und einem Betriebszustand, in welchem diese als Motor betreibbar ist, umschaltbar. Vorteilhafterweise ist auch diese Baugruppe als Taumelscheibenaggregat aufgebaut.

Man erkennt in Fig. 1, dass die Hydraulik-Antriebsunterstützungseinheit 38 und das Antriebsaggregat 26 zueinander parallel über die Getriebeanordnung 28 mit den verschiedenen Hydraulikkreisläufen 30, 34 gekoppelt oder koppelbar sind. Somit ist ein nachfolgend detaillierter beschriebener direkter Drehmomentenaustausch beispielsweise zwischen dem Antriebsaggregat 26 und den Hydraulikkreisläufen 30, 34 und auch ein direkter Drehmomentenaustausch zwischen der Hydraulik-Antriebsunterstützungseinheit 38 und den Hydraulikkreisläufen 30, 34 möglich.

Die Hydraulik-Antriebsunterstützungseinheit 38 umfasst ferner einen Druckfluidspeicher 42, welcher durch den Betrieb der Hydraulik-Pumpe/Motor-Baugruppe 40 als Pumpe geladen werden kann. Dazu kann die HydraulikPumpe/Motor-Baugruppe 40 Fluid, z. B. Hydrauliköl, aus einem vorzugsweise drucklosen Fluidreservoir 44 in Richtung zum Druckfluidspeicher 42 fördern.

In einer von der Hydraulik-Pumpe/Motor-Baugruppe 40 zum Druckfluidspeicher 42 führenden Leitung 46 ist eine Lade/Entlade-Ventileinheit 48 vorgesehen. Diese z. B. durch elektrische Erregung zu verstellende Lade/Entlade-Ventileinheit 48 ist beispielsweise durch eine Vorspannfeder oder dergleichen in den in Fig. 1 dargestellten Grundzustand vorgespannt, in welchem sie die Strömungsverbindung zwischen der Hydraulik-Pumpe/Motor-Baugruppe 40 und dem Druckfluidspeicher 42 unterbricht. Dabei kann die Lade/Entlade-Ventileinheit 48 so ausgebildet sein, dass sie in diesem Zustand als Rückschlagventil wirksam ist, welches zwar einen Fluidstrom von der Hydraulik-Pumpe/Motor-Baugruppe 40 zum Druckfluidspeicher 42 zulässt, jedoch einen Fluidstrom in umgekehrter Richtung unterbindet. Beispielsweise durch elektrische Erregung der Lade/Entlade-Ventileinheit 48 wird diese in ihren Freigabezustand gebracht, in welchem die Strömungsverbindung zwischen dem Druckfluidspeicher 42 und der Hydraulik-Pumpe/Motor-Baugruppe 40 freigegeben ist.

Von dem zwischen dem Druckfluidspeicher 42 und der Lade/Entlade-Ventileinheit 48 liegenden Abschnitt 50 der Leitung 46 zweigt eine zum Fluidreservoir 44 führende Leitung 52 ab. Diese Leitung 52 stellt grundsätzlich eine Verbindung zwischen dem Druckfluidspeicher 42 und dem Fluidreservoir 44 her. In der Leitung 52 sind parallel zueinander drei Ventileinheiten 54, 56, 58 angeordnet. Die Ventileinheit 54 ist eine beispielsweise elektrisch erregbare Entspannungs-Ventileinheit 54, die beispielsweise durch Federvorspannung in einen Grundzustand vorgespannt ist, in welchem sie die Strömungsverbindung zwischen dem Druckfluidspeicher 42 und dem Fluidreservoir 44 freigibt. Bei Aktivierung der Entspannungs-Ventileinheit 54 beispielsweise durch elektrische Erregung wird diese in ihren die Strömungsverbindung zwischen dem Druckfluidspeicher 42 und dem Fluidreservoir 44 unterbrechenden Zustand geschaltet. Dabei kann die Entspannungs-Ventileinheit 54 so ausgebildet sein, dass sie in diesem Zustand als Rückschlagventil wirksam ist, welches eine Fluidströmung vom Fluidreservoir 44 in Richtung zum Druckfluidspeicher 42 grundsätzlich zulässt, eine Fluidströmung in umgekehrter Richtung jedoch unterbindet.

Parallel zur Entspannungs-Ventileinheit 54 ist eine Manuell-Entspannungs-Ventileinheit 56 vorgesehen. Diese kann durch manuelle Betätigung in ihren die Strömungsverbindung zwischen dem Druckfluidspeicher 42 und dem Fluidreservoir 44 freigebenden Zustand gebracht werden.

Parallel zu den Ventileinheiten 54, 56 ist in der Leitung 52 eine Überlast-Ventileinheit 58 vorgesehen, welche dann, wenn der Fluiddruck im Druckfluidspeicher 42 bzw. im Abschnitt 50 der Leitung 48 einen vorbestimmten Grenzdruck übersteigt, eine Entspannung des Druckfluidspeichers 42 zum Fluidreservoir 44 zulässt. Beispielsweise kann vorgesehen sein, dass bei maximaler Beladung im Druckfluidspeicher 42 ein Fluiddruck von etwa 300 bar vorherrschen soll. Bei derartiger Auslegung kann die Überlast-Ventileinheit 58 so dimensioniert sein, dass sie bei einen Druck von 300 bar übersteigendem Druck im Druckfluidspeicher 42 eine Strömungsverbindung zwischen dem Druckfluidspeicher 42 und dem Fluidreservoir 44 herstellt, bis der Fluiddruck im Druckfluidspeicher 42 wieder unter diesen Grenzwert abgefallen ist.

Die Hydraulik-Antriebsunterstützungseinheit 38 umfasst ferner eine Umwälz-Ventileinheit 60. Diese ist im Strömungsweg zwischen der HydraulikPumpe/Motor-Baugruppe 40 und dem Fluidreservoir 44 vorgesehen und zweigt von einem zwischen der Hydraulik-Pumpe/Motor-Baugruppe 40 und der Lade/Entlade-Ventileinheit 48 liegenden Abschnitt 62 der Leitung 46 ab. Die Umwälz-Ventileinheit 60 ist grundsätzlich in einen Zustand vorgespannt, in welchem eine Strömungsverbindung zwischen der Hydraulik-Pumpe/Motor-Baugruppe 40 und dem Fluidreservoir 44 besteht. Durch z. B. elektrische Erregung kann diese Umwälz-Ventileinheit 60 in einen Zustand gebracht werden, in welchem diese Strömungsverbindung unterbrochen ist. In diesem Zustand kann die Umwälz-Ventileinheit 60 als Rückschlagventil wirksam sein, das eine Strömung von der Hydraulik-Pumpe/Motor-Baugruppe 40 zum Fluidreservoir 44 unterbindet, eine Strömung in der anderen Richtung jedoch freigibt.

Die Umwälz-Ventileinheit 60 kann bei in der Sperrstellung positionierter Lade/Entlade-Ventileinheit 48 dann zum Herstellen einer Strömungsverbindung zwischen der Hydraulik-Pumpe/Motor-Baugruppe 40 und dem Fluidreservoir 44 genutzt werden, wenn eine Fluidumwälzung aus dem Fluidreservoir 44 und zurück in das Fluidreservoir 44 stattfinden soll, ohne dabei den Druckfluidspeicher 42 weiter zu laden. Dies kann vorteilhaft sein, um einen minimalen Fluidstrom durch die Hydraulik-Pumpe/Motor-Baugruppe 40 aufrecht zu erhalten, um im Bereich dieser Baugruppe generierte Wärme abzuführen.

Parallel zu der Umwälz-Ventileinheit 60 ist ferner eine Überlast-Ventileinheit 64 angeordnet, welche so dimensioniert sein kann, dass sie bei über dem maximalen Ladedruck liegendem Grenzdruck, beispielsweise bei einem Grenzdruck von etwa 330 bar, eine Strömungsverbindung zum Fluidreservoir 44 freigibt, um einen übermäßigen Druckaufbau insbesondere im Bereich der Leitung 46 zu verhindern.

Ferner ist parallel zur Umwälz-Ventileinheit 60 und zur Überlast-Ventileinheit 64 ein Rückschlagventil 66 vorgesehen. Dieses ist so geschaltet, dass es eine Strömung von dem Fluidreservoir 44 in die Leitung 46, insbesondere den Abschnitt 62 derselben, zulässt, eine Strömung in der anderen Richtung jedoch unterbindet, um auf diese Art und Weise das Entstehen eines Unterdrucks im Bereich der Leitung 46 zu verhindern.

In Zuordnung zu allen entweder durch elektrische Erregung oder durch manuelle Betätigung zu verstellenden und einen Strömungsweg zum Fluidreservoir 44 freigebenden Ventileinheiten, also der Entspannungs-Ventileinheit 54, der Manuell-Entspannungs-Ventileinheit 56 und der Umwälz-Ventileinheit 60, sind Strömungsdrosselanordnungen 68, 70, 72 vorgesehen, welche insbesondere beim Bestehen sehr großer Druckdifferenzen zwischen dem Druckfluidspeicher 42 und dem Fluidreservoir 44 eine Drosselung des Fluidstroms zum Fluidreservoir 44 bewirken.

Die Antriebs-Unterstützungseinheit 38 umfasst ferner eine Anlass-Ventileinheit 74, die in einem die Lade/Entlade-Ventileinheit 48 umgehenden Bypassströmungsweg 76 angeordnet ist. Dieser Bypassströmungsweg mündet in die Abschnitte 62 bzw. 50 der Leitung 46 ein. In Strömungsrichtung von dem Druckfluidspeicher 42 zur Hydraulik-Pumpe/Motor-Baugruppe 40 stromaufwärts, also vor der Anlass-Ventileinheit 74, ist eine Strömungsdrosselanordnung 78 vorgesehen.

Die Anlass-Ventileinheit 74 wird in einen den Bypassströmungsweg 76 absperrenden Grundzustand vorgespannt und ist so ausgebildet dass sie in diesem Grundzustand als Rückschlagventil wirksam ist und sie eine Strömung von der Hydraulik-Pumpe/Motor-Baugruppe 40 zum Druckfluidspeicher 42 zulässt, eine Strömung in der anderen Richtung jedoch unterbindet. Durch beispielsweise elektrische Erregung kann die Anlass-Ventileinheit 74 in einen eine Strömungsverbindung vom Druckfluidspeicher 42 zur Hydraulik-Pumpe/Motor-Baugruppe 40 freigebenden Zustand gebracht werden. Dabei ist vorzugsweise die Anlass-Ventileinheit 74 so ausgebildet, dass sie veränderbare, vorzugsweise regelbare Volumenströme bereitstellen kann, um auf diese Art und Weise den in Richtung zur Hydraulik-Pumpe/Motor-Baugruppe 40 geleiteten Volumenstrom entsprechend variieren zu können. Beispielsweise kann die Anlass-Ventileinheit 74 als Proportionalventil ausgebildet sein. Zusätzlich sorgt die im Bypassströmungsweg 76 vor der Anlass-Ventileinheit 74 vorgesehene Strömungsdrosselanordnung 78 dafür, dass nur ein reduzierter Volumenstrom vom Druckfluidspeicher 42 zur Anlass-Ventileinheit 74 strömen kann, so dass ein bezüglich des aus dem Druckfluidspeicher 42 grundsätzlich abgebbaren Volumenstroms bereits reduzierter Volumenstrom durch die Anlass-Ventileinheit 74 reguliert werden kann, um einen in einem Anlassbetriebszustand zur Hydraulik-Pumpe/Motor-Baugruppe 44 geleiteten Volumenstrom dazu zu nutzen, in einem Motorbetrieb der Hydraulik-Pumpe/Motor-Baugruppe 40 über die Getriebeanordnung 28 ein als Anlassdrehmoment für das Antriebsaggregat 26 wirksames Antriebsunterstützungsdrehmoment bereitzustellen.

Bei dem vorangehend beschriebenen Antriebssystem 10 besteht zwischen der Hydraulik-Antriebsunterstützungseinheit 38 und den für den Betrieb der Baumaschine 10 erforderlichen Hydraulikkreisläufen 30, 34 keine Fluidaustauschverbindung. Die Hydraulik-Antriebsunterstützungseinheit 38 ist mit den Hydraulikkreisläufen 30, 34 ausschließlich antriebsmäßig, also mechanisch gekoppelt, nämlich über die Getriebeanordnung 28. Dies gestattet es, die Hydraulik-Antriebsunterstützungseinheit 38 als offenen Kreislauf, also als Niederdruckkreislauf auszugestalten, während die Hydraulikkreisläufe 30, 34 als geschlossene Hydraulikkreisläufe, also als Hochdruckkreisläufe, ausgebildet sein können.

Das in Fig. 1 dargestellte Antriebssystem 10 kann in verschiedenen Betriebsmodi arbeiten. Die Fig. 1 zeigt einen Zustand, bei welchem die Hydraulik-Antriebsunterstützungseinheit 38 so geschaltet ist, dass der Druckfluidspeicher 42 in Verbindung mit dem Fluidreservoir 44 ist, also ein darin ggf. aufgebauter Druck sich entspannen kann bzw. kein Druck aufgebaut wird. Dies ist ein Zustand, der dann eingenommen werden kann, wenn das Antriebssystem 10 außer Betrieb ist.

Soll das Antriebssystem 10 betrieben werden, beispielsweise um den in Fig. 2 dargestellten Bodenverdichter voranzubewegen und dabei auch unter Ausnutzung von Vibrations- oder/und Oszillationsbewegungen der Verdichterwalze 24 den Untergrund 18 zu verdichten, wird die Lade/Entlade-Ventileinheit 48 erregt, so dass sie in ihren eine Verbindung zwischen dem Druckfluidreservoir 42 und der Hydraulik-Pumpe/Motor-Baugruppe 40 herstellenden Zustand ist. Gleichzeitig werden auch die Entspannungs-Ventileinheit 54 und die Umwälz-Ventileinheit 60 angesteuert bzw. erregt, um sie in ihren Sperrzustand zu bringen. Das Antriebsaggregat 26 kann in diesem Zustand über die Getriebeanordnung 28 die beiden Hydraulikpumpen 32, 36 für den Fahrantrieb und den Antrieb der Unwuchtmassenanordnung antreiben. Ferner wird die Hydraulik-Pumpe/Motor-Baugruppe 40 angetrieben, so dass diese als Pumpe arbeitend Fluid aus dem Fluidreservoir 44 in den Druckfluidspeicher 42 fördert. Dieser Zustand kann so lange beibehalten werden, bis der Druckfluidspeicher 42 eine Schwellenbeladung erreicht hat, die beispielsweise bei 85 % der maximalen Beladung liegen kann. Bei einem maximalen Ladedruck von etwa 300 bar kann diese Schwellenbeladung also einem Ladedruck von etwa 255 bar entsprechen.

Ist dieser Zustand erreicht, kann die Hydraulik-Pumpe/Motor-Baugruppe 44 weiterhin im Pumpenbetrieb, wenngleich mit geminderter Förderleistung weiterbetrieben werden, um etwaige Leckageverluste aus dem Druckfluidspeicher 42 über die diesen insbesondere in Richtung zum Fluidreservoir 44 hin absperrenden Ventileinheiten zu kompensieren und dafür zu sorgen, dass ein Druck aufrecht erhalten bleibt, der in etwa der Schwellenbeladung entspricht.

Wird im Betrieb der Baumaschine 12 Energie frei, beispielsweise weil diese verzögert werden soll oder der Betrieb der Unwuchtmassenanordnung eingestellt werden soll, so findet in den Hydraulikkreisläufen 30, 34 eine Umkehr der Drehmomentenübertragungsrichtung statt, so dass vorübergehend die Hydraulikpumpen 32, 36, angetrieben durch einen durch die jeweiligen nicht dargestellten Hydraulikmotoren generierten Fluidstrom, als Motoren wirksam sind und ein Drehmoment in die Getriebeanordnung 28 einleiten. Dieses Drehmoment kann über die Getriebeanordnung 28 in die HydraulikPumpe/Motor-Baugruppe 40 eingeleitet werden, welche dann wieder als Pumpe genutzt werden kann, um den Druck im Druckfluidspeicher 42 weiter zu erhöhen, beispielsweise bis der maximale Ladedruck erreicht ist. Dazu wird die Hydraulik-Pumpe/Motor-Baugruppe 40 in einen Zustand mit erhöhter Förderleistung gestellt, so dass der erforderliche bzw. gewünschte Druckaufbau im Druckfluidspeicher 42 erreicht wird. Dieser Vorgang kann so lange fortgesetzt bzw. so oft wiederholt werden, bis die maximale Beladung des Druckfluidspeichers 42, also der maximale Ladedruck von beispielsweise 300 bar, erreicht ist. Ist dies der Fall, kann die Hydraulik-Pumpe/Motor-Baugruppe 40 wieder in einen Zustand mit geringerer Förderleistung bzw. Förderrate verstellt werden, um dafür zu sorgen, dass im Druckfluidspeicher 42 der unter Ausnutzung wenigstens eines Energierückgewinnungsvorgangs auf den maximalen Ladedruck erhöhte Druck aufrecht erhalten bleibt.

Es ist darauf hinzuweisen, dass dieser Energierückgewinnungsbetrieb zum weiteren Beladen des Druckfluidspeichers 42 auch dann genutzt werden kann, wenn nur aus einem der beiden Hydraulikkreisläufe 30, 34 die Rückgewinnung von Energie möglich ist. Ferner kann auch in diesem Zustand das Antriebsaggregat 26 noch genutzt werden, um ein zusätzliches Drehmoment in die Getriebeanordnung 28 einzuleiten, insbesondere wenn in einen Energierückgewinnungsbetrieb übergegangen werden kann, gleichzeitig der Druckfluidspeicher 42 jedoch noch nicht den Zustand der Schwellenbeladung von beispielsweise etwa 85 % der maximalen Beladung erreicht hat.

Insbesondere im Energierückgewinnungsbetrieb ist es besonders vorteilhaft, dass über die Getriebeanordnung 28 eine direkte Verbindung zwischen den Hydraulikkreisläufen 30, 34 und der Hydraulik-Antriebsunterstützungseinheit 38 besteht, so dass die im Energierückgewinnungsbetrieb freigesetzte Energie ohne beispielsweise über das Antriebsaggregat 26 geleitet zu werden in Richtung zur Hydraulik-Antriebsunterstützungseinheit 38 geleitet werden kann.

Besteht im Bereich von einem oder beiden Hydraulikkreisläufen 30, 34 eine hohe Drehmomentenanforderung, beispielsweise weil kurzzeitig die Baumaschine 12 eine vergleichsweise hohe Steigung überwinden soll oder über eine Randsteinkante oder ein sonstiges Hindernis hinweg bewegt werden soll, kann die im Druckfluidspeicher 42 gespeicherte Energie genutzt werden, um bei Betreiben der Hydraulik-Pumpe/Motor-Baugruppe 40 als Motor ein Antriebsunterstützungsdrehmoment in die Getriebeanordnung 28 einzuleiten und dieses über die Getriebeanordnung 28 zu einem oder beiden Hydraulikkreisläufen 30, 40 zu leiten, also zum unterstützenden Antreiben der jeweiligen Hydraulikpumpe 32 bzw. 36 zu nutzen. In diesem Zustand kann beispielsweise auch das Antriebsaggregat 26 so betrieben werden, dass es das durch dieses maximal bereitstellbare Antriebsdrehmoment liefern kann, so dass ein Gesamtantriebsdrehmoment über die Getriebeanordnung 28 zu den Hydraulikkreisläufen 30, 34 geleitet wird, welches sich aus dem Antriebsdrehmoment des Antriebsaggregats 26, beispielsweise dem maximalen Antriebsdrehmoment desselben, und dem Antriebsunterstützungsdrehmoment der Hydraulik-Antriebsunterstützungseinheit 38 zusammensetzt. Um diesen Zustand zu erreichen, ist die Lade/Entlade-Ventileinheit 48 in ihren Freigabezustand geschaltet, so dass der Druckfluidspeicher 42 sich über die Hydraulik-Pumpe/Motor-Baugruppe 40 in Richtung zum Fluidreservoir 44 entleeren kann. Das in diesem Antriebsunterstützungsbetriebszustand durch die Hydraulik-Antriebsunterstützungseinheit 38 bereitstellbare Drehmoment kann durch entsprechende Verstellung der Hydraulik-Pumpe/Motor-Baugruppe 40 im Motorbetrieb variiert werden.

Soll die mit dem Antriebssystem 10 ausgestattete Baumaschine 12 vorübergehend nicht genutzt werden, jedoch nicht vollständig deaktiviert werden, so kann für das Antriebsaggregat 26 ein Start-Stopp-Betrieb vorgesehen sein, in welchem das Antriebsaggregat 26 vorübergehend abgestellt wird. Dies kann beispielsweise dann der Fall sein, wenn ein Fahrhebel der Baumaschine 12 über die Neutralposition hinaus in eine Parkposition bewegt wird, was einerseits zum Abfall der Drehzahl des Antriebsaggregats 12 auf die Leerlaufdrehzahl führt und andererseits dazu führen kann, dass zum Verhindern eines unbeabsichtigten Wegrollens eine Parkbremsanordnung aktiviert wird. Beispielsweise eine vorbestimmte Zeitdauer nach dem Übergang in diesen Zustand, also nach dem Aktivieren der Parkposition, kann das Antriebsaggregat 26 automatisch abgestellt werden, da davon auszugehen ist, dass in diesem Zustand nicht unmittelbar eine Drehmomentenanforderung entstehen wird. In diesem Zustand ist der Druckfluidspeicher 42 grundsätzlich abgesperrt, was bedeutet, dass alle den Druckfluidspeicher 42 entweder mit dem Fluidreservoir 44 oder der Hydraulik-Pumpe/Motor-Baugruppe 44 verbindenden Leitungen 46, 52 durch die darin jeweils vorgesehenen Ventileinheiten bzw. Ventile abgesperrt sind. Der Druckfluidspeicher 42 ist in diesem Zustand geladen, so dass das darin enthaltene Druckfluid zur Erzeugung eines Antriebsunterstützungsdrehmoments genutzt werden kann.

Wird ausgehend von diesem Zustand eine Betriebsanforderung generiert, beispielsweise durch Verstellen des Fahrhebels der Baumaschine 12 aus der Parkposition in die Neutralposition, aus welcher dann beispielsweise die Vorwärtsfahrposition oder die Rückwärtsfahrposition eingenommen werden kann, wird die Hydraulik-Antriebsunterstützungseinheit 38 im Anlassbetriebszustand betrieben. Dazu bleiben die Ventileinheiten 48, 54, 56, 60 in ihrem Sperrzustand und die Anlass-Ventileinheit 74 wird in ihren Freigabezustand geschaltet, so dass ein Volumenstrom des im Druckfluidspeicher 42 enthaltenen Druckfluids in Richtung zur Hydraulik-Pumpe/Motor-Baugruppe 40 strömt. Diese wird in diesem Zustand als Motor betrieben und zwar derart, dass mit dem über die Anlass-Ventileinheit 74 heranströmenden Volumenstrom ein derartiges Antriebsunterstützungsdrehmoment generiert wird, dass das Antriebsaggregat 12 angelassen werden kann. Ist das Antriebsaggregat 26 wieder im Betrieb, kann die Anlass-Ventileinheit 74 wieder in ihren Sperrzustand gebracht werden und die Hydraulik-Pumpe/Motor-Baugruppe 40 kann beispielsweise wieder im Pumpenbetrieb betrieben werden, um erforderlichenfalls den Druckfluidspeicher 42 wieder zu laden, oder kann im Antriebsunterstützungszustand betrieben werden, um beispielsweise dann, wenn beim Anfahren der Baumaschine 12 oder bei der Inbetriebnahme des Hydraulik-Arbeitskreislaufs 34 eine hohe Drehmomentenanforderung besteht, als Motor betrieben zu werden und ein Antriebsunterstützungsdrehmoment bereitzustellen.

Die Ausgestaltung des Antriebssystems 10 ermöglicht es, das Antriebsaggregat 26 so hinsichtlich des durch dieses maximal bereitstellbaren Antriebsdrehmoments auszulegen, dass dieses maximale Antriebsdrehmoment kleiner ist, als ein im Betrieb der Baumaschine 12 maximal auftretendes Anforderungsdrehmoment. Da in Zuständen, in welchen eine derartige Drehmomentenanforderung vorliegt, die Hydraulik-Antriebsunterstützungseinheit 38 das Antriebsunterstützungsdrehmoment bereitstellen kann, ist es möglich, ein Gesamtantriebsdrehmoment in die Hydraulikkreisläufe 30, 34 einzuleiten, welches dem angeforderten Drehmoment entspricht, um somit die Baumaschine 12 in geeigneter Weise betreiben zu können.

Durch diese Auslegung des Antriebsaggregats 26 mit vergleichsweise niedrigem maximalem Antriebsdrehmoment wird bei allgemein geringer Baugröße eine effiziente Energieausnutzung gewährleistet, bei welcher insbesondere auch die in verschiedenen Zuständen der Baumaschine 12 frei werdende Energie genutzt werden kann, um den Druckfluidspeicher 42 zu laden.

Es sei darauf hingewiesen, dass das in Fig. 1 dargestellte Antriebssystem insbesondere hinsichtlich der Ausgestaltung der Hydraulik-Antriebsunterstützungseinheit in verschiedenster Weise variiert werden kann. So könnten selbstverständlich mehrere beispielsweise parallel geschaltete Druckfluidspeicher vorgesehen sein. Auch können die verschiedenen Ventile bzw. Ventileinheiten jeweils als separat aufgebaute und durch Leitungen miteinander verbundene Baugruppen vorgesehen sein oder können in einen Ventilblock integriert sein, was zu einer kompakten, gleichwohl jedoch mit hoher Betriebssicherheit arbeitenden Ausgetaltung beiträgt.

Ferner können beispielsweise die verschiedenen Hydraulikpumpen ebenso wie die Hydraulik-Pumpe/Motor-Baugruppe mit der Getriebeanordnung permanent, also nicht über den Drehmomentenfluss unterbrechende Kupplungsanordnungen oder dergleichen gekoppelt sein. Durch die Verstellung dieser beispielsweise als Taumelscheibenaggregate ausgebildeten Pumpen bzw. Baugruppen kann dann die Drehmomentenanforderung bzw. Fluidförderrate bzw. -leistung variiert werden. Soll ein jeweiliger Hydraulikkreislauf bzw. die Hydraulik-Antriebsunterstützungseinheit nicht betrieben werden, so können die Hydraulikpumpen bzw. die Hydraulik-Pumpe/Motor-Baugruppe in einen Neutralzustand geschaltet werden.

Der vorangehend beschriebene Aspekt des Betreibens der Antriebs-Unterstützungseinheit 38 im Anlassbetriebszustand kann in besonders vorteilhafter Weise kombiniert werden mit dem ebenfalls beschriebenen Aspekt des Betreibens der Hydraulik-Antriebsunterstützungseinheit 38 im Umwälzbetriebszustand, in welchem durch die Hydraulik-Pumpe/Motor-Baugruppe 40 Fluid aus dem Fluidspeicher 44 über die Umwälz-Ventileinheit 60 und zurück zum Fluidspeicher 44 geleitet wird, um eine Kühlwirkung für die Hydraulik-Pumpe/Motor-Baugruppe 40 zu generieren, und kann gleichermaßen alternativ oder zusätzlich in vorteilhafter Weise auch kombiniert werden mit dem vorangehend beschriebenen Aspekt der Auslegung des Antriebsaggregats 26 derart, dass das durch dieses bereitstellbare maximale Antriebsdrehmoment kleiner ist, als die im Betrieb auftretenden maximalen Anforderungsdrehmomente, wobei in einem derartigen Zustand das durch die Hydraulik-Antriebsunterstützungseinheit 38 bereitstellbare Antriebsunterstützungsdrehmoment genutzt werden kann, um in Verbindung mit dem durch das Antriebsaggregat 26 bereitgestellten Antriebsdrehmoment ein Gesamtdrehmoment bereitzustellen, das auch im Zustand höchster Drehmomentenanforderung genügt, um das Antriebssystem 10 in der angeforderten Art und Weise betreiben zu können.

## Patentansprüche

1. Antriebssystem, insbesondere für eine selbstfahrende Baumaschine, insbesondere Bodenverdichter, umfassend:
- ein eine Brennkraftmaschine umfassendes Antriebsaggregat (26),
- wenigstens einen Hydraulikkreislauf (30, 34) mit einer durch das Antriebsaggregat (26) antreibbaren Hydraulikpumpe (32, 36),
- eine Hydraulik-Antriebsunterstützungseinheit (38) mit einer HydraulikPumpe/Motor-Baugruppe (40) und wenigstens einem Druckfluidspeicher (42), wobei die Hydraulik-Pumpe/Motor-Baugruppe (40) mit dem Antriebsaggregat (26) oder/und wenigstens einem Hydraulikkreislauf (30, 34) antriebsmäßig gekoppelt oder koppelbar ist, wobei die HydraulikPumpe/Motor-Baugruppe (40) in einem Ladebetriebszustand durch das Antriebsaggregat (26) oder/und wenigstens einen Hydraulikkreislauf (30, 34) als Pumpe zum Beladen wenigstens eines Druckfluidspeichers (42) betreibbar ist und in einem Antriebsunterstützungsbetriebszustand als Motor zur Bereitstellung eines Antriebsunterstützungsdrehmomentes für die Hydraulikpumpe (32, 36) wenigstens eines Hydraulikkreislaufs (30, 34) betreibbar ist,
wobei die Hydraulik-Pumpe/Motor-Baugruppe (40) in einem Anlassbetriebszustand als Motor zum Anlassen des Antriebsaggregats (26) betreibbar ist, wobei die Hydraulik-Antriebsunterstützungseinheit (38) eine Anlass-Ventileinheit (74) zum wahlweisen Freigeben/Unterbrechen einer Strömungsverbindung zwischen wenigstens einem Druckfluidspeicher (42) und der HydraulikPumpe/Motor-Baugruppe (40) wenigstens in Strömungsrichtung von dem Druckfluidspeicher (42) zur Hydraulik-Pumpe/Motor-Baugruppe (40) umfasst und eine Lade/Entlade-Ventileinheit (48) zum wahlweisen Freigeben/Unterbrechen einer Strömungsverbindung zwischen der HydraulikPumpe/Motor-Baugruppe (40) und wenigstens einem Druckfluidspeicher (42) wenigstens in Strömungsrichtung vom Druckfluidspeicher (42) zur HydraulikPumpe/Motor-Baugruppe (40) umfasst,
**dadurch gekennzeichnet, dass** die Anlass-Ventileinheit (74) in einem die Lade/Entlade-Ventileinheit (48) umgehenden Bypassströmungsweg (76) angeordnet ist.

2. Antriebssystem nach Anspruch 1,
**dadurch gekennzeichnet, dass** im Strömungsweg zwischen dem wenigstens einen Druckfluidspeicher (42) und der Anlass-Ventileinheit (74) oder/und im Strömungsweg zwischen der Anlass-Ventileinheit (74) und der HydraulikPumpe/Motor-Baugruppe (40) eine Strömungsdrosselanordnung (78) vorgesehen ist.

3. Antriebssystem nach Anspruch 1 oder 2,
**dadurch gekennzeichnet, dass** die Anlass-Ventileinheit (74) ein Proportionalventil umfasst.

4. Antriebssystem nach einem der Ansprüche 1 bis 3,
**dadurch gekennzeichnet, dass** die Hydraulik-Antriebsunterstützungseinheit (38) eine Entspannungs-Ventileinheit (54) zum wahlweisen Freigeben/Unterbrechen einer Strömungsverbindung zwischen wenigstens einem Druckfluidspeicher (42) und einem Fluidreservoir (44) wenigstens in Strömungsrichtung vom Druckfluidspeicher (42) zum Fluidreservoir (44) umfasst.

5. Antriebssystem nach einem der Ansprüche 1 bis 4,
**dadurch gekennzeichnet, dass** die Anlass-Ventileinheit (74) oder/und die Lade/Entlade-Ventileinheit (48) in einen die Strömungsverbindung unterbrechenden Grundzustand vorgespannt ist oder/und dass die Entspannungs-Ventileinheit (54) in einen die Strömungsverbindung freigebenden Grundzustand vorgespannt ist.

6. Antriebssystem nach einem der Ansprüche 1 bis 5,
**dadurch gekennzeichnet, dass** die Hydraulik-Antriebsunterstützungseinheit (38) einen offenen Kreislauf umfasst.

7. Antriebssystem nach einem der Ansprüche 1 bis 6,
**dadurch gekennzeichnet, dass** zwischen wenigstens einem Hydraulikkreislauf (30, 34), vorzugsweise jedem Hydraulikkreislauf (30, 34), und der Hydraulik-Antriebsunterstützungseinheit (38) keine Fluidaustauschverbindung besteht.

8. Selbstfahrende Baumaschine, insbesondere Bodenverdichter, umfassend ein Antriebssystem (10) nach einem der vorhergehenden Ansprüche.

9. Verfahren zum Betreiben eines Antriebssystems, insbesondere für eine selbstfahrende Baumaschine, insbesondere Bodenverdichter, nach einem der Ansprüche 1 bis 7,
bei welchem Verfahren die Hydraulik-Pumpe/Motor-Baugruppe (40) in einem Anlassbetriebszustand als Motor zum Anlassen des Antriebsaggregats (26) betrieben wird, wobei in einem Antriebsunterstützungsbetriebszustand die Anlass-Ventileinheit (74) in einen die Strömungsverbindung unterbrechenden Sperrzustand und die Lade/Entlade-Ventileinheit (48) in einen die Strömungsverbindung freigebenden Freigabezustand geschaltet ist und wobei in einem Anlassbetriebszustand die Anlass-Ventileinheit (74) in einen die Strömungsverbindung freigebenden Freigabezustand und die Lade/Entlade-Ventileinheit (48) in einen die Strömungsverbindung unterbrechenden Sperrzustand geschaltet ist.

10. Verfahren nach Anspruch 9,
**dadurch gekennzeichnet, dass** das Antriebsaggregat (26) dann außer Betrieb gesetzt wird, wenn die Drehzahl des Antriebsaggregats (26) unter einer Schwellendrehzahl ist, vorzugsweise im Bereich einer Leerlaufdrehzahl des Antriebsaggregats (26) ist.

11. Verfahren nach Anspruch 9 oder 10,
**dadurch gekennzeichnet, dass** nach Erzeugung einer Betriebsanforderung für das Antriebssystem (10) die Hydraulik-Pumpe/Motor-Baugruppe (40) im Anlassbetriebszustand betrieben wird.

## Claims

1. Drive system, in particular for a self-propelled construction machine, in particular a soil compactor, comprising:
- a drive unit (26) comprising an internal combustion engine,
- at least one hydraulic circuit (30, 34) with a hydraulic pump (32, 36) that can be driven by the drive unit (26),
- a hydraulic-drive support unit (38) with a hydraulic pump/motor assembly (40) and at least one pressure fluid reservoir (42), wherein the hydraulic pump/motor assembly (40) is or can be drivingly coupled with the drive unit (26) or/and at least one hydraulic circuit (30, 34), wherein the hydraulic pump/motor assembly (40) can be operated in a charging operating mode by the drive unit (26) or/and at least one hydraulic circuit (30, 34) as a pump to charge at least one pressure fluid reservoir (42) and can be operated in a drive support operating mode as a motor to provide a drive support torque for the hydraulic pump (32, 36) of at least one hydraulic circuit (30,34),
wherein the hydraulic pump/motor assembly (40) can be operated in a starting operating mode as a motor to start the drive unit (26), wherein the hydraulic drive support unit (38) comprises a starting valve unit (74) to selectively release/interrupt a flow connection between at least one pressure fluid reservoir (42) and the hydraulic pump/motor assembly (40) at least in the flow direction from the pressure fluid reservoir (42) to the hydraulic pump/motor assembly (40) and a charge/discharge valve unit (48) to selectively release/interrupt a flow connection between the hydraulic pump/motor assembly (40), and at least one pressure fluid reservoir (42) at least in the flow direction from the pressure fluid reservoir (42) to the hydraulic pump/motor assembly (40),
**characterized in that** the starting valve unit (74) is arranged in a bypass flow path (76) bypassing the charge/discharge valve unit (48).

2. Drive system according to claim 1,
**characterized in that** a flow restriction arrangement (78) is provided in the flow path between the at least one pressure reservoir (42) and the starting valve unit (74) or/and in the flow path between the starting valve unit (74) and the hydraulic pump/motor assembly (40).

3. Drive system according to any one of claim 1 or 2,
**characterized in that** the starting valve unit (74) comprises a proportional valve.

4. Drive system according to one of claims 1 to 3,
**characterized in that** the hydraulic drive support unit (38) comprises an expansion valve unit (54) to selectively release/interrupt a flow connection between at least one pressure fluid reservoir (42) and a fluid reservoir (44) at least in a flow direction from the pressure fluid reservoir (42) to the fluid reservoir (44).

5. Drive system according to any one of claims 1 to 4,
**characterized in that** the starting valve unit (74) or/and the charge/discharge valve unit (48) is/are pre-tensioned to a basic state interrupting the flow connection, or/and in that the expansion valve unit (54) is pre-tensioned to a basic state releasing the flow connection.

6. Drive system according to any one of claims 1 to 5,
**characterized in that** the hydraulic drive support unit (38) comprises an open circuit.

7. Drive system according to any one of claims 1 to 6,
**characterized in that** there is no fluid exchange connection between at least one fluid circuit (30, 34), preferably each fluid circuit (30, 34), and the hydraulic drive support unit (38).

8. Self-propelled construction machine, in particular a soil compactor, comprising a drive system (10) according to one of the preceding claims.

9. Procedure to operate a drive system, in particular for a self-propelled construction machine, in particular a soil compactor, according to one of claims 1 to 7,
in which procedure the hydraulic pump/motor assembly (40) is operated in a starting operating mode as a motor to start the drive unit (26), wherein in a drive support operating mode the starting valve unit (74) is set to a blocking state interrupting the flow connection and the charge/discharge valve unit (48) is set to a release state releasing the flow connection and wherein in a starting operating mode the starting valve unit (74) is set to a release state releasing the flow connection and the charge/discharge valve unit (48) is set to a blocking state interrupting the flow connection.

10. Procedure according to claim 9,
**characterized in that** the drive unit (26) is put out of operation, when the speed of the drive unit (26) is below a threshold speed, preferably in the range of an idle speed of the drive unit (26).

11. Procedure according to claim 9 or 10,
**characterized in that** after generating an operating request for the drive system (10), the hydraulic pump/motor assembly (40) is operated in the starting operating mode.

## Revendications

1. Système d'entraînement, en particulier pour une machine de construction automotrice, notamment un compacteur de sol, comprenant :
- une unité d'entraînement (26) comprenant un moteur à combustion interne,
- au moins un circuit hydraulique (30, 34) avec une pompe hydraulique (32, 36) qui peut être entraînée par l'unité d'entraînement (26),
- une unité de support d'entraînement hydraulique (38) avec un ensemble pompe hydraulique/moteur (40) et au moins un réservoir de fluide sous pression (42), dans laquelle l'ensemble pompe hydraulique/moteur (40) est ou peut être couplé en entraînement avec l'unité d'entraînement (26) et/ou au moins un circuit hydraulique (30, 34), dans lequel l'ensemble pompe hydraulique/moteur (40) peut être actionné dans un mode de fonctionnement de charge par l'unité d'entraînement (26) et/ou au moins un circuit hydraulique (30, 34) comme pompe pour charger au moins un réservoir de fluide sous pression (42) et peut être actionné dans un mode de fonctionnement d'assistance à l'entraînement comme moteur pour fournir un couple d'assistance à l'entraînement pour la pompe hydraulique (32, 36) d'au moins un circuit hydraulique (30, 34),
dans lequel l'ensemble pompe hydraulique/moteur (40) peut être utilisé en mode de démarrage comme moteur pour démarrer l'unité d'entraînement (26), dans lequel l'unité de support d'entraînement hydraulique (38) comprend une unité de soupape de démarrage (74) pour libérer/interrompre sélectivement une connexion d'écoulement entre au moins un réservoir de fluide sous pression (42) et l'ensemble pompe/moteur hydraulique (40) au moins dans la direction d'écoulement du réservoir de fluide sous pression (42) vers l'ensemble pompe hydraulique/moteur (40) et une unité de soupape de charge/décharge (48) pour libérer/interrompre sélectivement une connexion d'écoulement entre l'ensemble pompe hydraulique/moteur (40), et au moins un réservoir de fluide sous pression (42) au moins dans la direction d'écoulement du réservoir de fluide sous pression (42) vers l'ensemble pompe hydraulique/moteur (40),
**caractérisé en ce que** l'unité de soupape de démarrage (74) est disposée dans un chemin d'écoulement de contournement (76) contournant l'unité de soupape de charge/décharge (48).

2. Système d'entraînement selon la revendication 1,
**caractérisé en ce qu'**un agencement de limitation de débit (78) est prévu dans le chemin d'écoulement entre ledit au moins un réservoir de pression (42) et l'unité de soupape de démarrage (74) et/ou dans le chemin d'écoulement entre l'unité de soupape de démarrage (74) et l'ensemble pompe hydraulique/moteur (40).

3. Système d'entraînement selon l'une des revendications 1 ou 2,
**caractérisé en ce que** l'unité de soupape de démarrage (74) comprend une soupape proportionnelle.

4. Système d'entraînement selon l'une des revendications 1 à 3,
**caractérisé en ce que** l'unité de support d'entraînement hydraulique (38) comprend une unité de soupape de détente (54) pour libérer/interrompre sélectivement une connexion d'écoulement entre au moins un réservoir de fluide sous pression (42) et un réservoir de fluide (44) au moins dans la direction d'écoulement du réservoir de fluide sous pression (42) vers le réservoir de fluide (44).

5. Système d'entraînement selon l'une des revendications 1 à 4,
**caractérisé en ce que** l'unité de soupape de démarrage (74) ou/et l'unité de soupape de charge/décharge (48) est/sont précontraintes dans un état de base interrompant la connexion d'écoulement, ou/et **en ce que** l'unité de soupape de détente (54) est précontrainte dans un état de base libérant la connexion d'écoulement.

6. Système d'entraînement selon l'une des revendications 1 à 5,
**caractérisé en ce que** l'unité de support d'entraînement hydraulique (38) comprend un circuit ouvert.

7. Système d'entraînement selon l'une des revendications 1 à 6,
**caractérisé en ce qu**'il n'y a pas de connexion d'échange de fluide entre au moins un circuit hydraulique (30, 34), de préférence chaque circuit hydraulique (30, 34), et l'unité de support d'entraînement hydraulique (38).

8. Machine de construction automotrice, en particulier un compacteur de sol, comprenant un système d'entraînement (10) selon l'une des revendications précédentes.

9. Procédé pour faire fonctionner un système d'entraînement, en particulier pour une machine de construction automotrice, en particulier un compacteur de sol, selon l'une des revendications 1 à 7,
dans lequel procédé l'ensemble pompe hydraulique/moteur (40) est actionné dans un mode de fonctionnement de démarrage en tant que moteur pour démarrer l'unité d'entraînement (26), dans lequel, dans un mode de fonctionnement d'assistance à l'entraînement, l'unité de soupape de démarrage (74) est placée dans un état de blocage interrompant la connexion d'écoulement et l'unité de soupape de charge/décharge (48) est placée dans un état de libération libérant la connexion d'écoulement et dans lequel, dans un mode de fonctionnement de démarrage, l'unité de soupape de démarrage (74) est placée dans un état de libération libérant la connexion d'écoulement et l'unité de soupape de charge/décharge (48) est placée dans un état de blocage interrompant la connexion d'écoulement.

10. Procédé selon la revendication 9,
**caractérisé en ce que** l'unité d'entraînement (26) est mise hors service, lorsque la vitesse de l'unité d'entraînement (26) est inférieure à une vitesse seuil, de préférence dans la plage d'une vitesse de ralenti de l'unité d'entraînement (26).

11. Procédé selon la revendication 9 ou 10,
**caractérisé en ce qu**'après avoir généré une demande de fonctionnement pour le système d'entraînement (10), l'ensemble pompe hydraulique/moteur (40) fonctionne dans le mode de fonctionnement de démarrage.
